# EUROPÄISCHE PATENTSCHRIFT

(11) **EP 4 571 444 B1**
(45) Veröffentlichungstag und Bekanntmachung des Hinweises auf die Patenterteilung: **02.12.2026**
(21) Anmeldenummer: 24206421.0
(22) Anmeldetag: 14.10.2024
(51) Int. Cl.: G05B 23/02

(54) **VERFAHREN UND VORRICHTUNG ZUR VERFOLGUNG VON BEHÄLTERN IN EINER ABFÜLLANLAGE**
METHOD AND DEVICE FOR TRACKING CONTAINERS IN A FILLING INSTALLATION
PROCÉDÉ ET DISPOSITIF DE SUIVI DE RÉCIPIENTS DANS UNE INSTALLATION DE REMPLISSAGE

(30) Priorität: 28.11.2023 DE 102023133223
(43) Veröffentlichungstag der Anmeldung: 18.06.2025
(73) Patentinhaber: Krones AG, 93073 Neutraubling (DE)
(72) Erfinder: PIANA, Stefan, 93073 Neutraubling (DE); HEWICKER, Alexander, 93073 Neutraubling (DE); NIEDERMEIER, Anton, 93073 Neutraubling (DE)
(74) Vertreter: Grünecker Patent- und Rechtsanwälte PartG mbB

(56) Entgegenhaltungen:
- EP-B1- 2 132 129
- WO-A1-2014/170079
- DE-A1- 102022 117 311

## Beschreibung

Die Erfindung betrifft ein Verfahren und eine Vorrichtung zur Verfolgung von Behältern in einer Anlage zum Herstellen und/oder Verpacken und/oder Befüllen der Behälter gemäß den Oberbegriffen der unabhängigen Ansprüche und wie bekannt aus der nachveröffentlichten DE 10 2022 117311 A1.

Ein Verfahren zur Überwachung und Steuerung einer Abfüllanlage und eine Vorrichtung zur Durchführung des Verfahrens ist aus der WO2014/170079 A1 bekannt.

Behälter können bekanntermaßen zum Zwecke der Getränkeabfüllung einbahnig stehend auf Transporteuren, beispielsweise Gliederketten aus Metall oder Kunststoff, entlang eines Fertigungspfads bewegt werden. Die Behälter bewegen sich dann aufgrund ihrer Haftreibung mit dem Transporteur prinzipiell synchron zu diesem. Die Verfolgung der Behälter, also deren individuelle Lokalisierung entlang des Fertigungspfads, erfolgt im Wesentlichen mittels des Transporteurs, indem dessen Bewegung beispielsweise über einen Drehimpulsgeber an einer Antriebsachse abgegriffen wird und so Weginkremente ermittelt werden. Die hierfür vorausgesetzte Synchronität der Behälter mit dem Transporteur kann jedoch aus folgenden Gründen oft nicht ausreichend eingehalten werden: Vibrationen des Transporteuers beispielsweise aufgrund polygonaler Antriebsräder können eine Asynchronität verursachen. Dies kann beispielsweise durch Steigungen des Transporteurs noch verstärkt werden. An Kurven oder Überschüben können die Behälter gegenüber dem Transporteur bei Kontakt mit Führungsgeländern verzögert werden.

Derartige Asynchronitäten müssen, beispielsweise falls der jeweilige Versatz größer als die Hälfte des Behälterdurchmessers ist, durch Nachsychronisation mittels Lichtschranken oder dergleichen Einrichtungen korrigiert werden. Dies kann je nach Verlauf und Länge der betroffenen Transportstrecke auch mehrmals hintereinander nötig sein.

Nachteilig ist zudem, dass eine Verfolgung von Behältern wie oben beschrieben auf mehrbahnigen Transporteuren mit amorpher Behälterbewegung, also bei ungeordnetem Massentransport, bei dem sich die Reihenfolge der Behälter im Produktstrom ändern kann, nicht möglich ist.

Zudem verursacht die Nachsynchronisation einen unerwünschten technischen Aufwand und ist zudem in bestimmten Fällen nur eingeschränkt oder gar nicht möglich, beispielsweise wenn der Bauraum im Bereich mehrerer nebeneinander angeordneter Transportgassen fehlt, um an jeder Reflexionslichtschranke anzuordnen. Auch müssen dafür verwendete Sensoren gegebenenfalls formatabhängig mehrfach angeordnet oder verstellt werden. Zudem lässt sich die Sensorik zur Nachsynchronisation bei bestimmten Umgebungsbedingungen, beispielsweise bei Feuchtigkeit im Auslauf einer Füllmaschine, nicht zuverlässig betreiben. Auch entsteht durch die Sensorik zusätzlicher Aufwand zur Reinigung und Instandhaltung der jeweiligen Behälterverfolgungsstrecke.

Es besteht somit demgegenüber Verbesserungsbedarf.

Wenigstens eines der zuvor genannten technischen Probleme wird mit dem Gegenstand der unabhängigen Ansprüche beseitigt oder zumindest abgemildert. Bevorzugte Ausführungsformen sind unter anderem in den Unteransprüchen angegeben.

Das Verfahren dient demnach zur Verfolgung (Tracking) von Behältern in einer Abfüllanlage oder dergleichen Anlage zum Herstellen und/oder Verpacken von Behältern, beispielsweise Flaschen oder Dosen, und/oder zum Befüllen der Behälter insbesondere mit Getränken. Die Behälter werden durch einen ortsfesten Abbildungsbereich wenigstens eines flächig abbildenden Sensors insbesondere stetig transportiert, der dabei jeweils mehrere Behälter in zeitlich versetzten Aufnahmen gemeinsam abbildet. Die Aufnahmen werden elektronisch ausgewertet, wodurch Tracking-Daten extrahiert (berechnet) und den Behältern individuell zugeordnet werden. Die Tracking-Daten umfassen wenigstens Identifizierungsinformation zur Identifizierung des jeweiligen Behälters und Aufenthaltsinformation betreffend eine Abfolge von Aufenthaltsorten und Aufenthaltszeitpunkten des jeweiligen Behälters.

Die Vorrichtung ist zur Verfolgung (Tracking) von Behältern, insbesondere Flaschen oder Dosen, in einer Abfüllanlage oder dergleichen Anlage zum Herstellen und/oder Verpacken der Behälter ausgebildet und umfasst hierzu: wenigstens einen flächig abbildenden Sensor mit einem ortsfesten Abbildungsbereich zum gemeinsamen Abbilden jeweils mehrerer der Behälter während ihres Transports in zeitlich zueinander versetzten Aufnahmen; und eine elektronische Auswerteinheit, die eingerichtet ist, aus den Aufnahmen Tracking-Daten einzelner Behälter zu extrahieren und den Behältern individuell zuzuordnen, wobei die Tracking-Daten Identifizierungsinformation zur Identifizierung des jeweiligen Behälters und Aufenthaltsinformation über eine Abfolge von Aufenthaltsorten und zugehörigen Aufenthaltszeitpunkten des jeweiligen Behälters umfassen.

Die Vorrichtung ist beispielsweise Bestandteil einer Anlage zum Herstellen und/oder Verpacken von Behältern und/oder Befüllen der Behälter insbesondere mit Getränken, insbesondere Bestandteil einer Abfüllanlage, welche jeweils umfasst: die Vorrichtung gemäß wenigstens einer der beschriebenen Ausführungsformen und wenigstens ein Transportmittel zum insbesondere frei stehenden und/oder stetigen Transport der Behälter durch den ortsfesten Abbildungsbereich.

In der Anlage kann der Vorrichtung vorgeschaltet und/oder nachgeschaltet sein: eine weitere Vorrichtung gemäß wenigstens einer der beschriebenen Ausführungsformen; ein die Behälter zwangsführendes Transportmittel; und/oder eine die Behälter zwangsführende Prozesseinheit zum Herstellen, Behandeln, Befüllen oder Verpacken der Behälter; ein Transporteur mit konventionellem synchronen Tracking.

Aufenthaltsorte der Behälter können beispielsweise durch eindimensionale Ortskoordinaten (bei einem geordneten einbahnigen Behältertransport und in Transportrichtung des verwendeten Transportmittels) oder zweidimensionale Ortskoordinaten (bei einem ungeordneten mehrbahnigen Behältertransport und beispielsweise in Transportrichtung des verwendeten Transportmittels und quer dazu), durch Bewegungsvektoren (jeweilige Bewegungsrichtung und -geschwindigkeit) und/oder durch Abstände zwischen Behältern (bei geordnetem einbahnigem Behältertransport) angegeben werden.

Zugeordnete Aufenthaltszeitpunkte sind beispielsweise die Aufnahmezeitpunkte der zur Extraktion verwendeten Aufnahmen der Behälter, können aber auch durch Interpolation oder Extrapolation von solchen Aufnahmezeitpunkten abgeleitet werden. Dies gilt dann gleichermaßen für die Extraktion von Positionsdaten wie beispielsweise Ortskoordinaten.

Da für die Extraktion keine Bewegungsdaten der verwendeten Transportmittel nötig sind, können Bewegungen einzelner Behälter entlang einer mittels des flächig abbildenden Sensors überwachten Behälterverfolgungsstrecke unabhängig von Relativbewegungen zwischen den Behältern und dem bzw. den die Behälter durch den Abbildungsbereich transportierenden Transportmittel bzw. Transportmitteln verfolgt werden. Behälterverfolgung bzw. Behältertracking ist daher ohne Nachsynchronisation von Behälter- und Transportmittelbewegungen zueinander möglich.

Anders gesagt beruht die beschriebene Verfolgung (Tracking) der Behälter auf einer mehrfachen Abbildung der Behälter während ihres Transports in geeigneten zeitlichen Abständen mittels des wenigstens einen flächig abbildenden Sensors (Flächensensors), beispielsweise einer Kamera, und auf einer Identifizierung der Behälter sowie auf einer Berechnung von ortsaufgelöster und zeitaufgelöster Aufenthaltsinformation für die einzelnen Behälter jeweils mittels elektronsicher Bildauswertung.

Die Aufenthaltsinformationen mehrerer, insbesondere aufeinanderfolgender Aufenthaltsorte und zugeordneter Aufenthaltszeitpunkte eines bestimmten Behälters kann jeweils wenigstens über den Verlauf einer zu überwachenden Behälterverfolgungsstrecke einer individuellen elektronischen Behälterkennung zugeordnet werden. Somit wird dann jedem Behälter ein Datensatz mit Tracking-Daten nachverfolgbar zugeordnet, beispielsweise in Form einer entlang eines Fertigungspfads durch die Anlage beibehaltenen individuellen Kennung sowie extrahierter Ortskoordinaten des jeweiligen Behälters und den Ortskoordinaten zugeordneter Zeitpunkte, die Bildaufnahmezeitpunkte sind und/oder von solchen durch Interpolation oder Extrapolation abgeleitet werden können.

Vorzugsweise ist der ortsfeste Abbildungsbereich einer Behälterverfolgungsstrecke zugeordnet, und die Tracking-Daten geben die Identität sowie Aufenthaltsorte und Aufenthaltszeitpunkte des jeweiligen Behälters wenigstens für einen Eingangsbereich und einen Ausgangsbereich der Behälterverfolgungsstrecke an und werden insbesondere rückverfolgbar gespeichert. Es ist dann zumindest bekannt, in welcher Reihenfolge die Behälter in die Behälterverfolgungsstrecke einlaufen und aus dieser wieder auslaufen, insbesondere auch die jeweils zugehörigen Zeitpunkte und/oder (Übergabe-)Orte der einzelnen Behälter. Damit ist eine individuelle Rückverfolgung der Behälter auch über die Grenzen der Behälterverfolgungsstrecke hinweg möglich, beispielsweise zu vor- und/oder nachgeschalteten Transportmitteln oder Prozesseinheiten, in denen die Behälter vorzugsweise zwangsgeführt, also in festgelegten Transportabständen, gehandhabt werden, ebenso zu weiteren Behälterverfolgungsstrecken der beschriebenen Art oder Transporteure mit konventionellem synchronen Tracking.

Eine Speicherung der Tracking-Daten ist beispielsweise in der verwendeten Auswerteeinheit oder an zentraler Stelle außerhalb der beschriebenen Vorrichtung möglich und ermöglicht eine individuelle Behälterrückverfolgung auch im Nachgang des Produktionsablaufs, beispielsweise zum Zwecke der Qualitätssicherung.

Vorzugsweise handelt es sich um ein kamerabasiertes Tracking, wobei Ist-Positionen einzelner Behälter entlang einer Behälterverfolgungsstrecke zyklisch und gleichzeitig für eine Vielzahl der Behälter ermittelt werden. Vorzugsweise wird jeder im Abbildungsbereich des wenigstens einen Flächensensors vorhandene Behälter bei jedem Aufnahmezyklus erfasst, was eine besonders zuverlässige Verfolgung der Behälter mit hoher Redundanz ermöglicht.

Der wenigstens eine Flächensensor kann als Matrixkamera (2D-Kamera herkömmlicher Bauart) oder als 3D-Kamera ausgebildet sein. Die Bildauswertung kann auf prinzipiell bekannten Verfahren beruhen, wie beispielsweise auf Triangulation, Time-of-Flight, Shape-from-Shading und/oder Stereometrie. Prinzipiell wäre auch der Einsatz wenigstens einer Zeilenkamera denkbar.

Der Flächensensor kann für ultraviolettes, sichtbares und/oder infrarotes Licht empfindlich sein. Prinzipiell wären auch andere berührungslose, bildgebende Flächensensoren denkbar, beispielsweise auf der Grundlage von Radar, Ultraschall oder Lidar, sofern eine ortsauflösende Erfassung der mittels Behälterverfolgung zu überwachende Transportstrecke möglich ist.

Die Sensorik zur Verfolgung der Behälter ist ausgebildet, unabhängig von der Bewegung des jeweiligen, die Behälter während der Verfolgung bewegenden Transporteurs zu arbeiten. Das heißt, die Beteiligung am jeweiligen Transporteur vorhandener Drehgeber oder dergleichen Sensorik ist für das beschriebene Verfahren nicht erforderlich, ist jedoch optional beispielsweise zur Plausibilitätskontrolle von Ergebnissen möglich.

Die beschriebene (Spur-)Verfolgung der Behälter kann auch zur Erkennung unterschiedlicher Behälterbewegungen verwendet werden, wie beispielsweise einer manuellen Entnahme von Behältern, einem Notstopp, eines Umfallens von Behältern und/oder eines Kontakts mit anderen Behältern oder transporttechnisch stationären Anlagenteilen.

Vorzugsweise beträgt die Bildaufnahmerate des wenigstens eine Flächensensors 5 bis 40 Bilder pro Sekunde.

Die Positionsdaten der einzelnen Behälter können mittels prinzipiell bekannter, regelbasierter Algorithmik erkannt werden, beispielsweise auf der Grundlage von Alpha-/Beta-/Gamma-Filter, Kalman-Filter und/oder sequentiellen Monte-Carlo-Methoden. Die Bildauswertung kann aber auch mittels neuronaler Netze erfolgen, die speziell für eine Bildauswertung optimiert sind, wie beispielsweise mittels CNN.

Als Merkmale zur Lokalisierung der Behälter in den jeweiligen Aufnahmen eignen sich beispielsweise Verschlusskappen der Behälter oder bei unverschlossenen Behältern deren Mundstücke. Denkbar sind aber auch Konturmerkmale der Behälter oder deren Inhalt.

Aufenthaltsinformation kann durch Auswertung mehrerer und insbesondere aller Aufnahmen, in denen ein bestimmter Behälter abgebildet ist, ermittelt werden. Die Aufenthaltsinformation kann darin bestehen, dass Bewegungsvektoren einzelner Behälter von Aufnahme zu Aufnahme berechnet werden. Durch Interpolation sind Aussagen zu Behälterpositionen in Zeitintervallen zwischen ausgewerteten Aufnahmen möglich. Ebenso können zukünftige Behälterpositionen durch Extrapolation prognostiziert werden, was beispielsweise einer Wiedererkennung und sicheren Identifikation einzelner Behälter im aufeinanderfolgenden Aufnahmen dient.

Auf der Grundlage der beschriebenen Behälterverfolgung können Inspektionssensoren an einer Behälterverfolgungsstrecke oder unmittelbar im Anschluss daran getriggert werden, beispielsweise, wenn Behälter an einer optimalen Aufnahmeposition bezüglich des Inspektionssensors sind. Ebenso können Aktoren zur Behältermanipulation, wie beispielsweise Ausleitsysteme für einzelne Behälter, exakt angesteuert werden, wenn einzelne Behälter an einer Ausleitposition sind.

Die beschriebene Verfolgung von Behältern wird auch als Tracking bezeichnet. Diese Begriffe werden hier synonym verwendet. Anders gesagt wird unter Tracking die Verfolgung individueller Behälter über eine bestimmte Transportstrecke und/oder über einen Zeitraum verstanden, wobei durchweg die Identifikation des jeweiligen Behälters gegeben ist.

Vorteilhafte Anwendungen sind beispielsweise:
- Tracking im Auslauf eines Dosenfüllers, wenn Dosen mit hoher Geschwindigkeit aus einem Auslaufstern kommen und erst eine variable Strecke auf einem Transporteur rutschen, bis sie soweit abgebremst sind, dass sie zu diesem synchron laufen. Durch Anordnung eines Flächensensors (beispielsweise einer Kamera) außerhalb des Füllers und geneigte Aufnahmeperspektive kann der Flächensensor außerhalb eines Bereichs mit ungünstig hoher Feuchte platziert werden.
- Tracking über komplexe Transportstrecken mit Kurven, Überschüben, Führungselementen oder dergleichen, wo ansonsten mehrfach Synchronisation notwendig wäre und/oder Inspektionssensoren bzw. Behältermanipulatoren nicht zuverlässig zu triggern wären.
- Tracking an einem höhenverstellbaren Füllerauslauf mit einem sortenabhängig mit unterschiedlicher Steigung arbeitenden Auslauftransporteur.
- Tracking bei Transport der Behälter mit Staudruck, beispielsweise im Einlauf einer Rundläufermaschine mit Einlaufschnecke, wo der zugeordnete Transporteur unter den Behältern schneller läuft als diese und die Einlaufschnecke.
- Tracking an mehrbahnigen Transporteuren mit amorphem Behälterstrom, beispielsweise auch unabhängig davon, ob es sich um eine starre Pufferstrecke oder um einen bedarfsgesteuert variablen Puffer handelt. Dabei können sich Behälter gegenseitig überholen und im Staubereich sogar teilweise entgegen der Transportrichtung oder quer dazu gedrückt werden. Zudem ist das Tracking auch an den Übergängen von einem einbahnigen zu einem mehrbahnigen Transport und umgekehrt möglich.

Die beschriebene Behälterverfolgung ist unabhängig von Verschleißzuständen der verwendeten Transporteure. Folglich sind die diesbezüglichen Anforderungen an die Transporteure geringer, wodurch Instandhaltungsaufwand reduziert werden kann.

Behälter können mit der beschriebenen (Spur-)Verfolgung nicht nur aufrecht stehend lokalisiert werden. Darüber hinaus können auch andere Behälterposen, wie unterschiedliche Drehlagen, liegende Förderung oder dergleichen erkannt werden. Die ermittelte Aufenthaltsinformation kann dann zum Beispiel zusätzlich Information zur Ausrichtung der Behälter bezüglich der Transportrichtung umfassen.

Da die Behälter jeweils in mehreren Aufnahmen abgebildet werden, können davon abgeleitete Positionsdaten gegebenenfalls interpoliert werden, wenn einzelne Behälter in einer bestimmten Aufnahme nicht erkannt und lokalisiert werden können. Auf diese Weise könnte Aufenthaltsinformation für Behälter ermittelt werden, die vorübergehend von einer durch den Abbildungsbereich verlaufenden Querstrebe oder dergleichen verdeckt sind, also im Sinne einer interpolierenden Rekonstruktion von Positionsdaten bzw. Aufenthaltsinformation.

Der wenigstens eine Flächensensor eignet sich prinzipiell auch dazu, mehrere nebeneinander verlaufende Transportstrecken auf die beschriebene Weise zu überwachen, auch falls diese unterschiedlich schnell oder gegenläufig laufen.

Mit Hilfe des wenigstens einen Flächensensors können zudem Merkmale der Behälter erkannt werden, wie beispielsweise das Vorhandensein eines Verschlusses, die Art eines Verschlusses, das Vorhandensein und/oder die Ausrichtung eines Embossings und/oder die Behälterfarbe.

Mit dem wenigstens einen Flächensensor könnten unterschiedliche Objektarten und/oder Situationen unterschieden werden, wie beispielsweise eine in den Behälterstrom eingreifende Hand und/oder umgefallene Behälter.

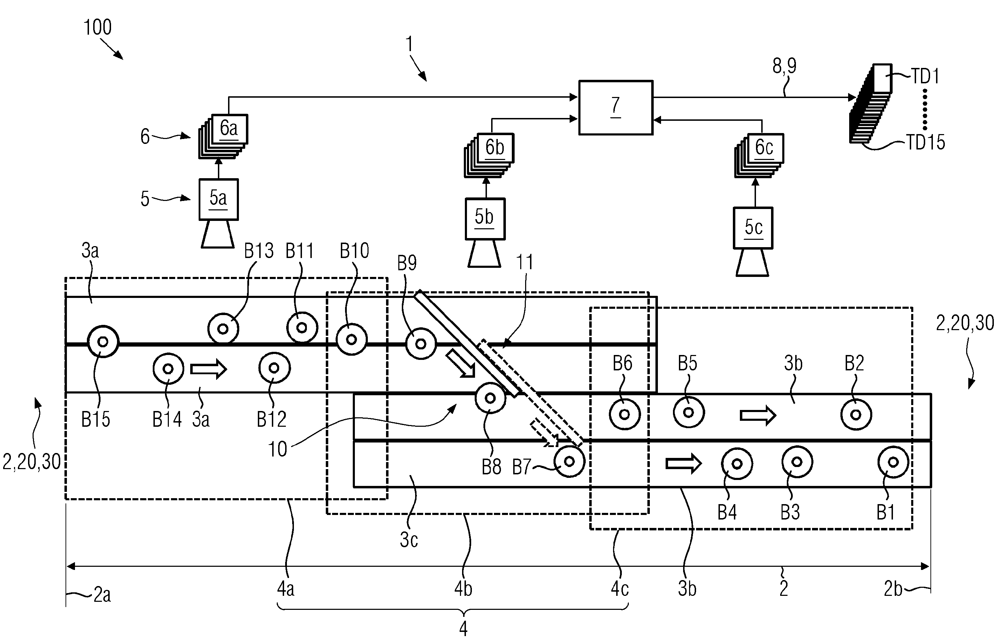

Eine bevorzugte Ausführungsform ist zeichnerisch dargestellt. Die einzige Figur zeigt eine schematische Draufsicht auf die Vorrichtung.

Wie die Figur erkennen lässt, umfasst die Vorrichtung 1 zum individuellen Verfolgen (Tracking) von Behältern B1 bis B15 eine Behälterverfolgungsstrecke 2, entlang der die Behälter B1 bis B15 hier beispielhaft mittels eines ersten Transportmittels 3a mehrbahnig ungeordnet und mittels eines zweiten und dritten Transportmittels 3b, 3c jeweils einbahnig geordnet transportiert werden.

Die Behälter B1 bis B15, bei denen es sich beispielsweise um Flaschen oder Dosen handelt, können auf den Transportmitteln 3a, 3b, 3c jeweils freistehen, also ohne eine individuelle Zwangsführung der Behälter B1 bis B15 beim Transport.

Die Transportmittel 3a, 3b, 3c laufen im Produktionsbetrieb vorzugsweise kontinuierlich. Jedoch ist dies für das beschriebene Verfahren nicht zwingend erforderlich.

Die Vorrichtung 1 umfasst zur Spurverfolgung (Tracking) der Behälter B1 bis B15 einen ortsfesten Abbildungsbereich 4 wenigstens eines flächig abbildenden Sensors 5 zur Abbildung der Behälter B1 bis B15 auf der Behälterverfolgungsstrecke 2 in einer geordneten Abfolge von Aufnahmen 6.

Im gezeigten Beispiel wird der wenigstens eine flächig abbildende Sensor 5 von drei Kameras 5a, 5b, 5c gebildet, deren Bildbereiche 4a, 4b, 4c teilweise überlappen und sich zum stationären Abbildungsbereich 4 ergänzen. Entsprechend liefert die erste Kamera 5a in bekannter zeitlicher Abfolge erste Kamerabilder 6a mit dem jeweils im ersten Bildbereich 4a vorhandenen Behältern (hier B10 bis B15), die zweite Kamera 5b in bekannter zeitlicher Abfolge zweite Kamerabilder 6b mit den jeweils im zweiten Bildbereich 4b vorhandenen Behältern (hier B6 bis B10) und die dritte Kamera 5c in zeitlich bekannter Abfolge dritte Kamerabilder 6c mit den jeweils im dritten Bildbereich 4c vorhandenen Behältern (hier B1 bis B6).

Es versteht sich allerdings, dass die Ausbildung des flächig abbildenden Sensors 5 in Form der ersten bis dritten Kamera 5a, 5b, 5c und die Kombination des stationären Abbildungsbereichs 4 aus dem ersten bis dritten Bildbereichen 4a, 4b, 4c lediglich beispielhaft und optional sind. Es könnte sich dabei auch nur um eine einzige auf geeignete Weise angeordnete Kamera 5a, 5b oder 5c bzw. dergleichen flächig abbildenden Sensor 5 und einen einzigen Bildbereich 4a, 4b oder 4c handeln. Ebenso müssen einzelne Bildbereiche 4a, 4b, 4c des Abbildungsbereichs 4 nicht überlappen, sondern könnten auch direkt aneinander angrenzen oder in geeignetem Abstand zueinander angeordnet sein.

Die Aufnahmen 6, hier in Form der ersten bis dritten Kamerabilder 6a, 6b, 6c werden beispielsweise jeweils mit einer Bildaufnahmerate von 5 bis 40 Bildern pro Sekunde erstellt.

Die Vorrichtung 1 umfasst wenigstens eine elektronische Auswerteeinheit 7 zum Auswerten der Aufnahmen 6 bzw. Kamerabilder 6a, 6b, 6c. Die Auswerteeinheit 7 ist dazu eingerichtet, einzelne Behälter B1 bis B15 in den Aufnahmen 6 zu lokalisieren und zu identifizieren. Hierfür können in der Auswerteeinheit 7 prinzipiell bekannte Algorithmen und/oder ein neuronales Netz implementiert sein. Die Auswerteeinheit 7 wertet einzelne Aufnahmen 6 bzw. Kamerabilder 6a, 6b, 6c aus und vergleicht vorzugsweise zudem Aufnahmen 6 bzw. Kamerabilder 6a, 6b, 6c miteinander.

Die elektronische Auswerteeinheit 7 extrahiert aus den Aufnahmen 6 bzw. Kamerabildern 6a, 6b, 6c individuelle Tracking-Daten TD1 bis TD15, die den einzelnen Behältern B1 bis B15 wenigstens während ihres Aufenthalts auf der Behälterverfolgungsstrecke 2 individuell zugeordnet sind.

Die Tracking-Daten TD1 bis TD15 umfassen jeweils wenigstens Identifizierungsinformation 8 zur Identifizierung der einzelnen Behälter B1 bis B15 und Aufenthaltsinformation 9 betreffend eine Abfolge von Aufenthaltsorten und zugeordneten Aufenthaltszeitpunkten der einzelnen Behälter B1 bis B15 innerhalb der Behälterverfolgungsstrecke 2.

Die Aufenthaltsinformation 9 kann beispielsweise eine Abfolge insbesondere zweidimensionaler Ortskoordinaten und zugehöriger Aufenthaltszeitpunkte umfassen, welche beispielsweise die Aufnahmezeitpunkte derjenigen Aufnahmen 6 (bzw. Kamerabilder 6a, 6b, 6c) sind, aus denen die Ortskoordinaten der Behälter B1 bis B15 extrahiert werden. Es wäre prinzipiell aber auch denkbar, lediglich eindimensionale Ortskoordinaten zu extrahieren, beispielsweise bei einbahnig geordnetem Behältertransport entlang einer (dann in der Regel) festgelegten Transportrichtung.

Die Aufenthaltsinformation 9 kann auch durch Interpolation oder Extrapolation von Bilddaten bzw. der daraus extrahierten Ortskoordinaten und der zugehörigen Aufnahmezeitpunkte berechnet werden. Extrapolierte Aufenthaltsinformation 9 kann beispielsweise einen nicht ausreichend einsehbaren Aufenthaltsort der Behälter B1 bis B15 betreffen, der in geeignetem Abstand außerhalb des stationären Abbildungsbereichs 4 liegt, beispielsweise unmittelbar stromabwärts davon. Auf dieser Grundlage könnte beispielsweise ein optisch vom stationären Abbildungsbereich 4 abgeschirmter Inspektionssensor (nicht dargestellt) getriggert werden.

Die individuellen Tracking-Daten TD1 bis TD15 ermöglichen es, die Behälter B1 bis B15, die beispielsweise Flaschen oder Dosen sind, bei ihrem Transport durch eine Abfüllanlage 100 oder dergleichen Anlage zum Herstellen, Behandeln und/oder Verpacken der Behälter B1 bis B15 individuell zu lokalisieren und optional auch entlang ihres Fertigungspfads zurückzuverfolgen.

Wie beispielhaft dargestellt ist, umfasst die Behälterverfolgungsstrecke 2 einen Eingangsbereich 2a, in dem die Behälter B1 bis B15 beispielsweise von einer weiteren, vorgeschalteten Behälterverfolgungsstrecke 2, einem die Behälter B1 bis B15 zwangsführenden Transportmittel 20 oder einer zwangsführenden Prozesseinheit 30 (jeweils nicht figürlich dargestellt) übernommen werden, und einen Ausgangsbereich 2b, von dem die Behälter B1 bis B15 beispielsweise an eine weitere, nachgeschaltete Behälterverfolgungsstrecke 2, an ein zwangsführendes Transportmittel 20 oder an eine Prozesseinheit 30 (ebenso nicht figürlich dargestellt) übergeben werden.

Im Bereich der Behälterverfolgungsstrecke 2 können (nicht dargestellte) Inspektionssensoren zur Inspektion der Behälter B1 bis B15 und/oder Behältermanipulatoren, beispielsweise zum gezielten Ausleiten einzelner der Behälter B1 bis B15 angeordnet sein.

Im dargestellten Beispiel werden die Behälter B1 bis B15 vom ersten Transportmittel 3a, bei dem es sich hier um einen bandförmigen Transporteur zum ungeordneten Massentransport handelt, an einem Überschub 10 mittels eines die Behälter B1 bis B15 seitlich ablenkenden Führungselements 11 wahlweise auf das zweite oder dritte Transportmittel 3b, 3c verteilt, bei denen es sich hier beispielhaft um bandförmige Transporteure zum einbahnig geordneten Behältertransport handelt, wie Gliederketten oder dergleichen.

Die optionale Einbindung des Überschubs 10 mit dem Führungselement 11 soll hier verdeutlichen, dass sich die Bewegungen der Behälter B1 bis B15 entlang der Behälterverfolgungsstrecke 2 hinsichtlich Richtung und Geschwindigkeit von den Bewegungen der Transporteure 3a, 3b, 3c unterscheiden können, ohne dadurch die beschriebene Behälterverfolgung zu beeinträchtigen.

Stattdessen arbeitet die beschriebene Vorrichtung 1 im Wesentlichen unabhängig von Antriebsparametern der einzelnen Transporteure 3a, 3b, 3c. Das heißt, zur Extraktion der Tracking-Daten TD 1 bis TD15 sind keine Ist-Antriebsdaten der Transporteure 3a, 3b, 3c nötig, wie beispielsweise die Übermittelung von Weginkrementen oder dergleichen. Derartige Daten könnten aber in der elektronischen Auswerteeinheit 7 optional zusätzlich berücksichtigt werden.

Der dargestellte Überschub 10 soll auch verdeutlichen, dass die beschriebene Vorrichtung 1 und das damit ausgeführte Verfahren zur Verfolgung der Behälter B1 bis B15 prinzipiell in beliebigen Transportabschnitten möglich ist, in denen die transportierten Behälter B1 bis B15 von wenigsten einem flächig abbildenden Sensor 5 geeignet einsehbar sind. Es spielt dann im Prinzip keine Rolle, ob Umstände auftreten, welche zu einer Abweichung der Behälterbewegungen von den Bewegungen der jeweils zugeordneten Transportmittel 3a, 3b, 3c führen.

Beispielsweise ist eine Verfolgung der Behälter B1 bis B15 im Sinne der vorliegenden Erfindung auch unter Staudruck, in Kurven und bei ruckartigen Verzögerungen und/oder Richtungswechseln möglich (nicht dargestellt), ebenso bei ungeordnetem Massentransport und/oder an die Behälter B1 bis B15 seitlich führenden, stationären Führungselementen 11.

Folglich ist eine Nachsynchronisation des zu überwachenden Behälterstroms mit den zugeordneten Transportmitteln 3a, 3b, 3c beispielsweise mittels Lichtschranken entbehrlich.

Der wenigstens eine flächig abbildende Sensor 5 bzw. die Kameras 5a, 5b, 5c könnten prinzipiell in unterschiedlicher Weise und je nach verfügbarem Bauraum oberhalb des zu überwachenden Behälterstroms (hier symbolisiert durch Blockpfeile) platziert werden. Die Kameras 5a, 5b, 5c sind hier nur der Übersichtlichkeit halber neben den Transportmitteln 3a, 3b, 3c dargestellt. Es wäre ebenso gut denkbar, die dargestellte Behälterverfolgungsstrecke 2 von schräg oberhalb der Transportmittel 3a, 3b, 3c mit lediglich einem einzigen flächig abbildenden Sensor 5, beispielsweise einer der Kameras 5a, 5b, 5c so abzubilden, dass damit geeignete Aufnahmen 6 erstellt und in der elektronischen Auswerteeinheit 7 zur Extraktion der Tracking-Daten TD1 bis TD15 verarbeitet werden können.

Durch die beschriebene Extraktion der individuellen Tracking-Daten TD1 bis TD15 lassen sich Aufenthaltsorte und zugehörige Aufenthaltszeitpunkte der einzelnen Behälter B1 bis B15 innerhalb der Behälterverfolgungsstrecke 2 im Wesentlichen unabhängig von den Transportbewegungen der verwendeten Transportmittel 3a, 3b, 3c prognostizieren, beispielsweise um auf dieser Grundlage Inspektionssensoren (nicht dargestellt) und/oder Aktoren von Behältermanipulatoren, beispielsweise zur gezielten Behälterausleitung, (nicht dargestellt) auszulösen.

Die Tracking-Daten TD1 bis TD15 können über mehrere (wie beschrieben überwachte) Behälterverfolgungsstrecken 2 identitätserhaltend fortgeschrieben werden. Eine individuelle Datenübergabe ist von einer transporttechnisch vorgeschalteten und/oder an eine nachgeschaltete Behälterverfolgungsstrecke 2 (nicht figürlich dargestellt) an die bzw. von der Auswerteeinheit 7 möglich. Dadurch ist auch eine transporttechnische Rückverfolgung einzelner Behälter B1 bis B15 wenigstens bis zum Eingangsbereich 2a der Behälterverfolgungsstrecke 2 möglich und dadurch gegebenenfalls auch weiter zu vorgeschalteten Behälterverfolgungsstrecken 2 oder insbesondere zwangsführenden Transportmitteln 20 bzw. Prozesseinheiten 30.

Eine identitätserhaltende Datenübergabe von Aufenthaltsinformationen 9 der Behälter B1 bis B15 ist demnach von einer transporttechnisch vorgeschalteten Prozesseinheit 30 (nicht figürlich dargestellt) zur insbesondere zwangsgeführten Verarbeitung der Behälter B1 bis B15 (z.B. im Neckhandling) an die Auswerteeinheit 7 und/oder von dieser an eine nachgeschaltete Prozesseinheit 30 (nicht figürlich dargestellt) möglich. Dies gilt prinzipiell auch für eingangsseitige und/oder ausgangsseitige Schnittstellen der Behälterverfolgungsstrecke 2 zu anderen, insbesondere zwangsführenden Transportmitteln 20 (nicht figürlich dargestellt), wie beispielsweise Transfersternen.

Somit ist eine prinzipiell durchgehende Verfolgung einzelner Behälter B1 bis B15 entlang eines Fertigungspfads in einer Anlage 100 des oben beschriebenen Typs möglich. Dies ermöglicht zudem eine entsprechende Rückverfolgung einzelner Behälter B1 bis B15 entlang kaskadierter Behälterverfolgungsstrecken 2, Transportmittel 20 und/oder Prozesseinheiten 30 zum Zwecke der Qualitätssicherung.

Zu diesem Zweck können die Tracking-Daten TD1 bis TD15 beispielsweise in der Auswerteeinheit 7 oder extern bzw. zentral an anderer Stelle gespeichert und für entsprechende Datenauswertungen zur individuellen Behälterrückverfolgung vorgehalten werden.

## Patentansprüche

1. Verfahren zur Verfolgung von Behältern (B1 - B15), insbesondere Flaschen oder Dosen, in einer Abfüllanlage (100), wobei die Behälter durch einen ortsfesten Abbildungsbereich (4) wenigstens eines flächig abbildenden Sensors (5) transportiert werden und dieser dabei jeweils mehrere Behälter in zeitlich versetzten Aufnahmen (6) gemeinsam abbildet, wobei die Aufnahmen elektronisch ausgewertet und dadurch den Behältern individuell zugeordnete Tracking-Daten (TD1 - TD15) extrahiert werden, die wenigstens umfassen: Identifizierungsinformation (8) zur Identifizierung des jeweiligen Behälters; und Aufenthaltsinformation (9) über eine Abfolge von Aufenthaltsorten und zugehörigen Aufenthaltszeitpunkten des jeweiligen Behälters, **dadurch gekennzeichnet, dass** die Tracking-Daten (TD1 - TD15) durch Identifikation und Lokalisierung des jeweiligen Behälters (B1- B15) in wenigstens 10 der Aufnahmen (6) extrahiert werden.

2. Verfahren nach Anspruch 1, wobei der ortsfeste Abbildungsbereich (4) einer Behälterverfolgungsstrecke (2) zugeordnet ist, die Tracking-Daten (TD1 - TD15) die Identität sowie Aufenthaltsorte und Aufenthaltszeitpunkte des jeweiligen Behälters (B1 - B15) wenigstens für einen Eingangsbereich (2a) und einen Ausgangsbereich (2b) der Behälterverfolgungsstrecke angeben und die Tracking-Daten (TD1 - TD15) insbesondere rückverfolgbar gespeichert werden.

3. Verfahren nach Anspruch 1 oder 2, wobei die Tracking-Daten (TD1 - TD15) durch Identifikation und Lokalisierung des jeweiligen Behälters (B1- B15) in wenigstens 20 der Aufnahmen (6) extrahiert werden.

4. Verfahren nach wenigstens einem der vorigen Ansprüche, wobei die Behälter (B1 - B15) innerhalb des stationären Abbildungsbereichs (4) auf wenigstens einem Transportmittel (3a, 3b, 3c) stehend wie folgt transportiert werden: im Form eines ungeordneten Massentransports; unter Staudruck; entlang einer Steigung, eines Gefälles und/oder einer Kurve; und/oder entlang eines die Behälter in stationärer Anordnung seitlich führenden und/oder ablenkenden Führungselements (11).

5. Verfahren nach wenigstens einem der vorigen Ansprüche, wobei die Behälter innerhalb des stationären Abbildungsbereichs (4) von einem ersten Transportmittel (3a) auf wenigstens ein zweites Transportmittel (3b, 3c) wechseln, insbesondere über einen quer zu den Transportmitteln verlaufenden Überschub (10).

6. Verfahren nach wenigstens einem der vorigen Ansprüche, wobei die Aufnahmen (6) in Form von Kamerabildern (6a - 6c) in Aufnahmezyklen mit einer Bildaufnahmerate von 5 - 40 Bildern pro Sekunde erstellt werden.

7. Verfahren nach wenigstens einem der vorigen Ansprüche, wobei auf der Grundlage der Tracking-Daten ( TD1 - TD15): wenigstens ein an einer Behälterverfolgungsstrecke (2) und/oder unmittelbar im Anschluss daran angeordneter Inspektionssensor zur Inspektion der Behälter (B1 - B15) getriggert wird, insbesondere wenn die Behälter an einer vorgegebenen Aufnahmeposition bezüglich des Inspektionssensors sind; und/oder wenigstens ein Aktor zur Behältermanipulation, insbesondere zum Ausleiten einzelner Behälter, angesteuert wird, insbesondere wenn einzelne der Behälter an einer vorgegebenen Ausleitposition sind.

8. Vorrichtung (1) zur Verfolgung von Behältern (B1 - B15), insbesondere Flaschen oder Dosen, in einer Abfüllanlage (100), umfassend: wenigstens einen flächig abbildenden Sensor (5) mit einem ortsfesten Abbildungsbereich (4) zum gemeinsamen Abbilden jeweils mehrerer der Behälter während ihres Transports in zeitlich zueinander versetzten Aufnahmen (6); eine elektronische Auswerteinheit (7), die eingerichtet ist, aus den Aufnahmen Tracking-Daten (TD1 - TD15) einzelner Behälter zu extrahieren und den Behältern individuell zuzuordnen, wobei die Tracking-Daten Identifizierungsinformation (8) zur Identifizierung des jeweiligen Behälters und Aufenthaltsinformation (9) über eine Abfolge von Aufenthaltsorten und zugehörigen Aufenthaltszeitpunkten des jeweiligen Behälters umfassen, **dadurch gekennzeichnet, dass** die Auswerteeinheit (7) dazu eingerichtet ist, die Tracking-Daten (TD1 - TD15) durch Identifikation und Lokalisierung des jeweiligen Behälters (B1- B15) in wenigstens 10 der Aufnahmen (6) zu extrahieren.

9. Vorrichtung nach Anspruch 8, wobei der ortsfeste Abbildungsbereich (4) einer Behälterverfolgungsstrecke (2) zugeordnet ist und die Auswerteeinheit (7) zur derartigen Extraktion der Tracking-Daten (TD1 - TD15) eingerichtet ist, dass die Identität sowie die Aufenthaltsorte und Aufenthaltszeitpunkte des jeweiligen Behälters (B1 - B15) wenigstens für einen Eingangsbereich (2a) und einen Ausgangsbereich (2b) der Behälterverfolgungsstrecke angegeben und insbesondere rückverfolgbar gespeichert werden können.

10. Vorrichtung nach Anspruch 8 oder 9, wobei die Auswerteeinheit (7) dazu eingerichtet ist, die Tracking-Daten (TD1 - TD15) durch Identifikation und Lokalisierung des jeweiligen Behälters (B1- B15) in wenigstens 20 der Aufnahmen (6) zu extrahieren.

11. Vorrichtung nach wenigstens einem der Ansprüche 8 bis 10, wobei der wenigstens eine flächig abbildende Sensor (5) auf wenigstens ein Transportmittel (3a, 3b, 3c) gerichtet ist, das zum stehenden Transport der Behälter (B1 - B15) im ungeordneten Massentransport, unter Staudruck, entlang einer Steigung, eines Gefälles und/oder einer Kurve, und/oder entlang eines die Behälter in stationärer Anordnung seitlich führenden und/oder ablenkenden Führungselements (11) ausgebildet ist.

12. Vorrichtung nach wenigstens einem der Ansprüche 8 bis 11, wobei der wenigstens eine flächig abbildende Sensor (5) auf einen Überschub (10) gerichtet ist, über den die Behälter (B1 - B15) von einem ersten Transportmittel (3a) auf wenigstens ein zweites Transportmittel (3b, 3c) insbesondere quer zu diesen wechseln.

13. Vorrichtung nach wenigstens einem der Ansprüche 8 bis 12, wobei der wenigstens eine flächig abbildende Sensor (5) eingerichtet ist, die Aufnahmen (6) insbesondere in Form von Kamerabildern (6a - 6c), in Aufnahmezyklen mit einer Bildaufnahmerate von 5 - 40 Bildern pro Sekunde zu erstellen.

14. Anlage zum Herstellen und/oder Verpacken von Behältern (B1 - B15) und/oder Befüllen der Behälter insbesondere mit Getränken, insbesondere Abfüllanlage (100), umfassend: die Vorrichtung nach wenigstens einem der Ansprüche 7 bis 12 und wenigstens ein Transportmittel (3a, 3b, 3c) zum stehenden Transport der Behälter (B1 - B15) durch den ortsfesten Abbildungsbereich (4).

15. Anlage nach Anspruch 14, wobei der Vorrichtung (1) vorgeschaltet und/oder nachgeschaltet ist: eine weitere Vorrichtung (1) gemäß einem der Ansprüche 7 bis 12; ein die Behälter (B1 - B15) zwangsführendes Transportmittel (20); und/oder eine die Behälter zwangsführende Prozesseinheit (30) zum Herstellen, Behandeln, Befüllen oder Verpacken der Behälter.

16. Anlage nach Anspruch 14 oder 15, wobei die Anlage wenigstens einen jeweils an einer Behälterverfolgungsstrecke (2) der Vorrichtung (1) oder unmittelbar im Anschluss daran angeordneten Inspektionssensor zur Inspektion der Behälter (B1 - B15) und/oder Aktor zur Manipulation der Behälter, insbesondere zu deren individueller Ausleitung, umfasst und dazu eingerichtet ist, den Inspektionssensor, insbesondere wenn die Behälter an einer vorgegebenen Aufnahmeposition bezüglich des Inspektionssensors sind, und/oder den Aktor, insbesondere wenn einzelne Behälter an einer Ausleitposition sind, auf der Grundlage der Tracking-Daten (TD1 - TD15) auszulösen.

## Claims

1. A method for tracking containers (B1 - B15), in particular bottles or cans, in a filling plant (100), wherein the containers are transported through a stationary imaging area (4) of at least one area-imaging sensor (5), and said sensor jointly images a respective plurality of containers in chronologically staggered images (6), wherein the images are electronically evaluated and tracking data (TD1 - TD15), respectively assigned to the containers, are thereby extracted, which tracking data comprise at least:
identification information (8) for identifying the respective container; and
location information (9) regarding a sequence of locations and associated times of presence of the respective container, **characterized in that** the tracking data (TD1 - TD15) are extracted by identifying and localizing the respective container (B1 - B15) in at least ten of the images (6).

2. The method according to claim 1, wherein the stationary imaging area (4) is assigned to a container tracking path (2), the tracking data (TD1 - TD15) indicate the identity as well as locations and times of presence of the respective container (B1 - B15) at least for an entry region (2a) and an exit region (2b) of the container tracking path, and the tracking data (TD1 - TD15) are stored, in particular, in a traceable manner.

3. The method according to claims 1 or 2, wherein the tracking data (TD1 - TD15) are extracted by identifying and localizing the respective container (B1 - B15) in at least twenty of the images (6).

4. The method according to at least one of the preceding claims, wherein the containers (B1 - B15) are transported standing upright on at least one transport means (3a, 3b, 3c) within the stationary imaging area (4) as follows:
in the form of a disordered mass transport; under dynamic pressure; along an ascent, a descent, and/or a curve; and/or along a guiding element (11) laterally guiding and/or deflecting the containers in a stationary arrangement.

5. The method according to at least one of the preceding claims, wherein the containers switch from a first transport means (3a) to at least one second transport means (3b, 3c) within the stationary imaging area (4), in particular via a transfer device (10) extending transversely to the transport means.

6. The method according to at least one of the preceding claims, wherein the images (6) are provided in the form of camera images (6a - 6c) in capturing cycles with an image capturing rate of 5-40 frames per second.

7. The method according to at least one of the preceding claims, wherein based on the tracking data (TD1 - TD15):
at least one inspection sensor arranged at a container tracking path (2) and/or directly subsequent thereto is triggered for inspecting the containers (B1 - B15), in particular when the containers are located at a predetermined imaging position with respect to the inspection sensor; and/or at least one actuator for manipulating containers, in particular for ejecting individual containers, is controlled, in particular when individual ones of the containers are located at a predetermined ejection position.

8. An apparatus (1) for tracking containers (B1 - B15), in particular bottles or cans, in a filling plant (100), comprising:
at least one area-imaging sensor (5) having a stationary imaging area (4) for jointly imaging a respective plurality of the containers during their transport in chronologically staggered images (6) an electronic evaluation unit (7) configured to extract tracking data (TD1 - TD15) of individual containers from the images and to individually assign the same to the containers, wherein the tracking data comprise identification information (8) for identifying the respective container and location information (9) regarding a sequence of locations and associated times of the presence of the respective container, **characterized in that** the evaluation unit (7) is configured to extract the tracking data (TD1 - TD15) by identifying and localizing the respective container (B1 - B15) in at least ten of the images (6).

9. The apparatus according to claim 8, wherein the stationary imaging area (4) is associated with a container tracking path (2) and the evaluation unit (7) is configured to extract the tracking data (TD1 - TD15) in such a way that the identity as well as the locations and times of presence of the respective container (B1 - B15) can be indicated and, in particular, traceably stored for at least an entry region (2a) and an exit region (2b) of the container tracking path.

10. The apparatus according to claims 8 or 9, wherein the evaluation unit (7) is configured to extract the tracking data (TD1 - TD15) by identifying and localizing the respective container (B1 - B15) in at least twenty of the images (6).

11. The apparatus according to at least one of claims 8 to 10, wherein the at least one area-imaging sensor (5) is directed towards transport means (3a, 3b, 3c) configured to transport the containers (B1 - B15) standing upright in the form of a disordered mass transport, under dynamic pressure; along an ascent, a descent, and/or a curve; and/or along a guiding element (11) laterally guiding and/or deflecting the containers in a stationary arrangement.

12. The apparatus according to at least one of claims 8 to 11, wherein the area-imaging sensor (5) is directed towards a transfer device (10) via which the containers (B1 - B15) switch from a first transport means (3a) to at least a second transport means (3b, 3c), in particular transversely thereto.

13. The apparatus according to at least one of claims 8 to 12, wherein the area-imaging sensor (5) is configured to provide the images (6), in particular in the form of camera images (6a - 6c) in capturing cycles with an image capturing rate of 5-40 frames per second.

14. A plant for manufacturing and/or packaging containers (B1 - B15) and/or filling the containers, particularly with beverages, in particular a filling plant (100), comprising:
the apparatus according to at least one of claims 7 to 12 and at least transport means (3a, 3b, 3c) for transporting the containers (B1 - B15) standing upright through the stationary imaging area (4).

15. The plant according to claim 14, wherein upstream and/or downstream of the apparatus (1) there is/are provided:
a further apparatus (1) according to anyone of claims 7 to 12; a transport means (20) positively guiding the containers (B1 - B15); and/or a process unit (30) positively guiding the containers for manufacturing, treating, filling, or packaging the containers.

16. The plant according to claims 14 or 15, wherein the plant comprises at least one inspection sensor for inspecting the containers (B1 - B15) and/or actuator for manipulating the containers, in particular for their individual rejection, respectively arranged on a container tracking path (2) of the apparatus (1) or directly subsequent thereto, and is configured to trigger the inspection sensor, in particular when the containers are located at a predetermined imaging position with respect to the inspection sensor, and/or the actuator, in particular when individual containers are located at an ejection position, on the basis of the tracking data (TD1 - TD15).

## Revendications

1. Procédé de suivi de récipients (B1 à B15), en particulier de bouteilles ou de boîtes, dans une installation de remplissage (100), dans lequel les récipients sont transportés à travers une région d'imagerie fixe (4) d'au moins un capteur d'imagerie de surface (5) et ledit capteur d'imagerie de surface crée simultanément des images de respectivement plusieurs récipients lors de prises de vues (6) décalées dans le temps, dans lequel les prises de vues sont évaluées électroniquement et des données de suivi (TD1 à TD15) associées individuellement aux récipients sont ainsi extraites, lesquelles données de suivi comprennent au moins : des Informations d'identification (8) permettant l'identification du récipient respectif ; et des informations de séjour (9) concernant une séquence de lieux de séjour et de moments de séjour correspondants du récipient respectif, **caractérisé en ce que** les données de suivi (TD1 à TD15) sont extraites par identification et localisation du récipient (B1 à B15) respectif sur au moins 10 des prises de vues (6).

2. Procédé selon la revendication 1, dans lequel la région d'imagerie fixe (4) est associée à une section de suivi de récipients (2), les données de suivi (TD1 à TD15) indiquent l'identité ainsi que les lieux et moments de séjour du récipient (B1 à B15) respectif au moins pour une région d'entrée (2a) et une région de sortie (2b) de la section de suivi de récipients et les données de suivi (TD1 à TD15) sont stockées en particulier de manière traçable.

3. Procédé selon la revendication 1 ou 2, dans lequel les données de suivi (TD1 à TD15) sont extraites par identification et localisation du récipient (B1 à B15) respectif sur au moins 20 des prises de vues (6).

4. Procédé selon au moins l'une quelconque des revendications précédentes, dans lequel les récipients (B1 à B15) sont transportés debout à l'intérieur de la région d'imagerie stationnaire (4) sur au moins un moyen de transport (3a, 3b, 3c) comme suit : sous la forme d'un transport de masse non ordonné ; sous pression dynamique ; le long d'une rampe, d'une pente et/ou d'une courbe ; et/ou le long d'un élément de guidage (11) guidant et/ou déviant latéralement les récipients selon un agencement stationnaire.

5. Procédé selon au moins l'une quelconque des revendications précédentes, dans lequel les récipients passent d'un premier moyen de transport (3a) à au moins un second moyen de transport (3b, 3c) à l'intérieur de la région d'imagerie stationnaire (4), en particulier par l'intermédiaire d'une zone de transfert par poussée (10) s'étendant transversalement par rapport aux moyens de transport.

6. Procédé selon au moins l'une quelconque des revendications précédentes, dans lequel les prises de vues (6) sont créées sous la forme d'images de caméra (6a à 6c) lors de cycles de prises de vues présentant une fréquence de prise comprise entre 5 et 40 images par seconde.

7. Procédé selon au moins l'une quelconque des revendications précédentes, dans lequel, en se basant sur les données de suivi ( TD1 à TD15) : au moins un capteur d'inspection agencé sur un trajet de suivi de récipients (2) et/ou immédiatement après ledit trajet de suivi de récipients est déclenché afin d'inspecter les récipients (B1 à B15), en particulier lorsque les récipients se trouvent au niveau d'une position de prises de vues prédéterminée par rapport au capteur d'inspection ; et/ou au moins un actionneur est commandé afin de manipuler les récipients, en particulier afin d'évacuer des récipients individuels, en particulier lorsque certains des récipients se trouvent au niveau d'une position d'évacuation prédéterminée.

8. Dispositif (1) de suivi de récipients (B1 à B15), en particulier de bouteilles ou de boîtes, dans une installation de remplissage (100), comprenant : au moins un capteur d'imagerie de surface (5) avec une région d'imagerie fixe (4) permettant une création d'images simultanée de plusieurs récipients pendant leur transport lors de prises de vues (6) décalés dans le temps les unes par rapport aux autres ; une unité d'évaluation électronique (7) conçue pour extraire des données de suivi (TD1 à TD15) de récipients individuels à partir des prises de vues et les associer individuellement aux récipients, dans lequel les données de suivi comprennent des informations d'identification (8) permettant l'identification du récipient respectif et des informations de séjour (9) concernant une séquence de lieux de séjour et de moments de séjour correspondants du récipient respectif, **caractérisé en ce que** l'unité d'évaluation (7) est conçue pour extraire les données de suivi (TD1 à TD15) par identification et localisation du récipient (B1 à B15) respectif sur au moins 10 des prises de vues (6).

9. Dispositif selon la revendication 8, dans lequel la région d'imagerie fixe (4) est associée à une section de suivi de récipients (2) et l'unité d'évaluation (7) est conçue pour une telle extraction des données de suivi (TD1 à TD15) de sorte que l'identité ainsi que les lieux et moments de séjour du récipient (B1 à B15) respectif peuvent être indiqués au moins pour une région d'entrée (2a) et une région de sortie (2b) de la section de suivi de récipients et peuvent être enregistrés, en particulier de manière traçable.

10. Dispositif selon la revendication 8 ou 9, dans lequel l'unité d'évaluation (7) est conçue pour extraire les données de suivi (TD1 à TD15) par identification et localisation du récipient (B1 à B15) respectif sur au moins 20 des prises de vues (6).

11. Dispositif selon au moins l'une quelconque des revendications 8 à 10, dans lequel le au moins un capteur d'imagerie de surface (5) est orienté vers au moins un moyen de transport (3a, 3b, 3c) qui est conçu pour le transport debout des récipients (B1 à B15) en un transport de masse non ordonné, sous pression dynamique, le long d'une rampe, d'une pente et/ou d'une courbe, et/ou le long d'un élément de guidage (11) guidant et/ou déviant latéralement les récipients selon un agencement stationnaire.

12. Dispositif selon au moins l'une quelconque des revendications 8 à 11, dans lequel le au moins un capteur d'imagerie de surface (5) est orienté vers une zone de transfert par poussée (10) par l'intermédiaire de laquelle les récipients (B1 à B15) passent d'un premier moyen de transport (3a) à au moins un second moyen de transport (3b, 3c), en particulier de manière transversale par rapport aux dits moyens de transport.

13. Dispositif selon au moins l'une quelconque des revendications 8 à 12, dans lequel le au moins un capteur d'imagerie de surface (5) est conçu pour créer les prises de vues (6) en particulier sous la forme d'images de caméra (6a à 6c) lors de cycles de prises de vues présentant une fréquence de prise comprise entre 5 et 40 images par seconde.

14. Installation de fabrication et/ou d'emballage de récipients (B1 à B15) et/ou de remplissage des récipients, en particulier avec des boissons, en particulier installation de remplissage (100), comprenant : le dispositif selon au moins l'une quelconque des revendications 7 à 12 et au moins un moyen de transport (3a, 3b, 3c) permettant de transporter debout les récipients (B1 à B15) à travers la région d'imagerie fixe (4).

15. Installation selon la revendication 14, dans laquelle le dispositif (1) est placé en amont et/ou en aval : d'un autre dispositif (1) selon l'une quelconque des revendications 7 à 12 ; d'un moyen de transport (20) guidant de manière contrainte les récipients (B1 à B15) ; et/ou d'une unité de procédé (30) guidant de manière contrainte les récipients afin de fabriquer, traiter, remplir ou emballer les récipients.

16. Système selon la revendication 14 ou 15, dans lequel l'installation comprend au moins un capteur d'inspection, agencé respectivement sur un trajet de suivi de récipients (2) du dispositif (1) ou immédiatement après ledit trajet de suivi de récipients afin d'inspecter les récipients (B1 à B15), et/ou un actionneur permettant de manipuler les récipients, en particulier en vue de leur évacuation individuelle, et est conçue pour déclencher le capteur d'inspection, en particulier lorsque les récipients se trouvent au niveau d'une position de prises de vues prédéterminée par rapport au capteur d'inspection, et/ou pour déclencher l'actionneur, en particulier lorsque des récipients individuels se trouvent au niveau d'une position d'évacuation, en se basant sur les données de suivi (TD1 à TD15).
